Europäisches Patentamt

European Patent Office

Office européen des brevets

(19)

(11) **EP 1 596 157 A1**

(12) ## DEMANDE DE BREVET EUROPEEN

(43) Date de publication:
**16.11.2005 Bulletin 2005/46**

(51) Int Cl.$^7$: **G01B 11/06**

(21) Numéro de dépôt: **04010795.5**

(22) Date de dépôt: **06.05.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(71) Demandeur: **Thomas, Edye**
**1400 Yverdon-les-Bains (CH)**

(72) Inventeur: **Thomas, Edye**
**1400 Yverdon-les-Bains (CH)**

(74) Mandataire: **Surmely, Gérard et al**
**I C B**
**Ingénieurs Conseils en Brevets SA,**
**Rue des Sors 7**
**2074 Marin (CH)**

(54) **Dispositif de mesure par interférométrie de l' épaisseur de couches transparentes minces sur un substrat en défilement**

(57)     Le dispositif de mesure par interférométrie d'une couche transparente (2) à une tête optique (26) comprenant une unité rotative (30) avec un premier miroir (34) dont la surface est plane ou presque plane et un deuxième miroir (38) déviant le faisceau incident (28) en direction de la couche (2), ce faisceau incident se propageant sensiblement de manière horizontale entre les deux miroirs. Le faisceau projeté sur la couche, qui défile à une certaine vitesse (v), effectue un déplacement sensiblement rectiligne de sorte qu'il est possible d'effectuer une mesure précise de l'épaisseur de la couche (2) en défilement à relativement haute vitesse, la région de mesure sur cette couche ne variant quasi pas au cours d'une mesure.

Fig. 4

EP 1 596 157 A1

## Description

La présente invention concerne un dispositif de mesure de l'épaisseur de couches transparentes relativement minces, en particulier sur un substrat en défilement. Une mesure de l'épaisseur d'une couche mince déposée sur divers films ou feuilles lors de la fabrication de structures multicouches permet de contrôler en production l'épaisseur de la couche et ainsi d'agir directement en rétroaction sur le dispositif servant au dépôt de la couche supérieure transparente à une certaine lumière.

Le domaine d'application premièrement concerné par la présente invention est donc la mesure de l'épaisseur d'une couche en défilement et en particulier directement à la suite de son dépôt. Par exemple lors de la fabrication de feuilles d'aluminium revêtue d'une couche transparente, notamment une couche de protection d'une impression, cette couche transparente est déposée par un défilement continu de la feuille d'aluminium par des moyens d'entraînement connus de l'homme du métier.

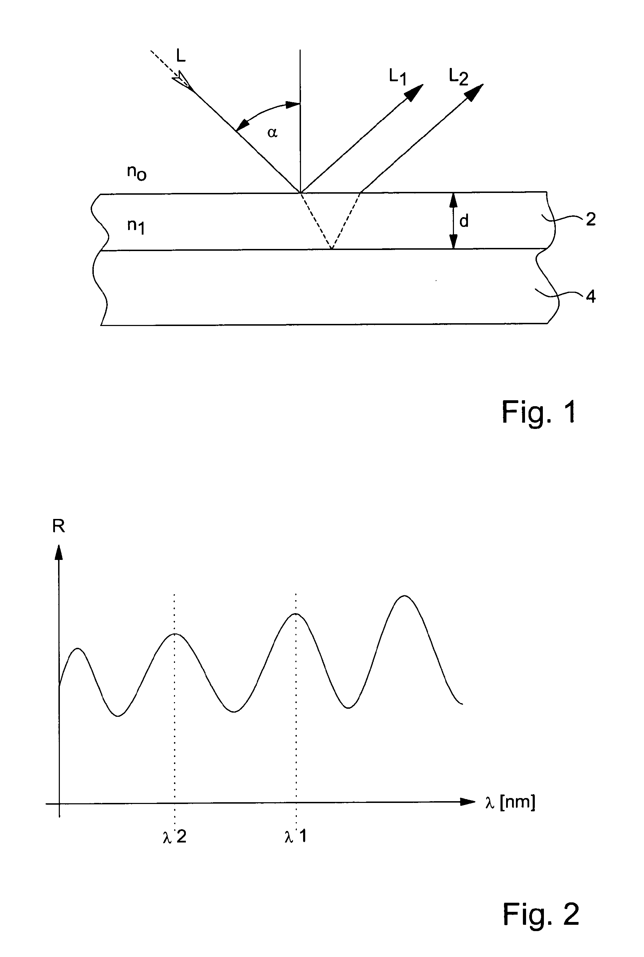

La mesure de couches minces par un procédé nommé "interférométrie à lumière blanche" est connue depuis de nombreuses années. On trouve sur le marché plusieurs dispositifs de mesure pour diverses applications. La mesure utilise le fait que la lumière blanche présente un spectre de longueur d'onde continu dans une certaine plage de longueurs d'onde définie. Comme représenté à la figure 1, un faisceau incident L sur une couche mince d'indice de réfraction n1, sous un angle d'incidence $\alpha$, est partiellement réfléchi selon la direction L1 et partiellement rétracté dans la couche 2. Le faisceau rétracté est ensuite réfléchi à l'interface entre la couche 2 et le substrat 4 et ensuite une partie de ce faisceau sort de la couche 2 selon une direction L2 parallèle à la direction L1. A ces deux directions L1 et L2 correspondent deux faisceaux partiels issus du faisceau incident L, ces deux faisceaux partiels présentent un déphasage qui est fonction de l'angle d'incidence $\alpha$, de l'épaisseur d de la couche 2 et de l'indice de réfraction n1 de cette couche 2. La différence de chemin optique entre L1 et L2 étant donnée, on observe une variation d'interférence en fonction de la longueur d'onde $\lambda$ de la lumière incidente comme représenté à la figure 2.

Généralement, le faisceau de lumière incidente L est projeté sur la couche transparente 2 avec un angle d'incidence $\alpha$ petit, notamment égal à 0. Dans ce dernier cas, on a une totale superposition des deux faisceaux partiels L1 et L2. Le graphe de la figure 2 est une mesure de la lumière réfléchie par la couche 2 en fonction de la longueur d'onde comprise dans la lumière incidente. On observe ainsi une interférence variable en fonction de la longueur d'onde. Plus particulièrement, on observe une alternance entre des maximums d'intensité et des minimums d'intensité qui correspondent respectivement à des interférences constructives et destructives. On déterminant précisément les longueurs d'ondes $\lambda$1 et $\lambda$2 correspondant à deux maximums d'intensité consécutifs pour la lumière réfléchie R, on peut calculer l'épaisseur d de la couche 2 à l'endroit de la mesure. Dans le cas d'une incidence normale du faisceau incident, la formule est donnée par

$$d = \frac{1}{2 \cdot n1} \cdot \frac{\lambda1 \cdot \lambda2}{\lambda1 - \lambda2}$$

L'indice de réfraction n1 de la couche 2 étant connu, on est à même de déterminer l'épaisseur d en fonction des deux seuls paramètres $\lambda$1 et $\lambda$2 susmentionnés.

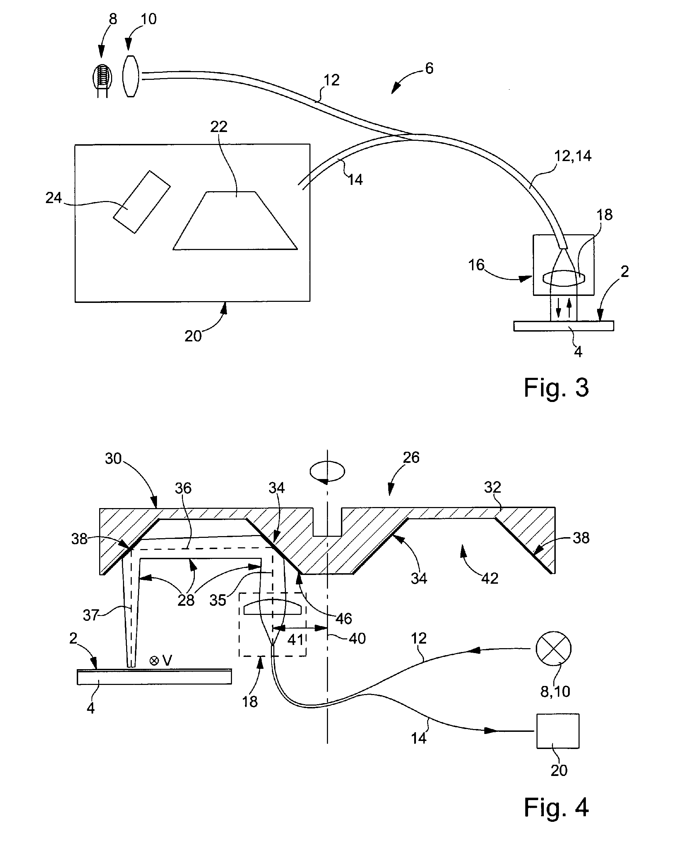

La figure 3 montre schématiquement un dispositif classique de mesure de couches minces par interférométrie à lumière blanche dont le principe de mesure est décrit ci-avant. Ce dispositif 6 de l'art antérieur comprend une source de lumière blanche 8 qui est injectée dans un faisceau de fibres optiques 12 par des moyens optiques 10. Le faisceau de fibres 12 est connecté à une tête optique 16 pour projeter la lumière sous forme de tâche lumineuse (spot) sur la couche mince transparente 2. La tête 16 comprend à cet effet notamment des moyens de focalisation 18 du faisceau lumineux divergent sortant des fibres optiques. Ce faisceau arrivant sur la couche 2 selon une direction normale à cette couche, il est donc réfléchi selon une direction normale. Ce faisceau réfléchi est injecté dans un faisceau de fibres optiques 14 formant initialement avec le faisceau de fibres 12 un faisceau commun. Après un certain parcours, le faisceau de fibres 14 s'écarte du faisceau 12 en direction d'un spectromètre 20 connu de l'homme du métier. De manière classique, le spectromètre comprend un prisme 22 et une rangée de photodiodes 24 permettant de déterminer l'intensité de la lumière réfléchie en fonction de la longueur d'onde de la lumière fournie par la source 8.

Dans le dispositif de la figure 3, la tête optique 16 est fixe et fournit un faisceau incident selon un axe optique qui ne varie pas. Ainsi, dans le cas de la mesure d'une couche mince en défilement devant la tête 16, la précision de la mesure de l'épaisseur de la couche diminue lorsque la vitesse de défilement du film ou de la couche 2 augmente, jusqu'à une certaine valeur au-delà de laquelle la mesure devient impossible. Le problème majeur réside dans le fait que l'épaisseur de la couche 2 n'est pas parfaitement uniforme. Lorsque l'épaisseur de la couche varie pendant la durée de la mesure, les maximums et minimums d'intensité lumineuse reçus par le spectromètre se déplacent dans le spectre des longueurs d'onde. Ce phénomène empêche de distinguer précisément la position de deux maximums consécutifs dans le spectre de sorte qu'il n'est pas possible de mesurer précisément l'épaisseur de la couche.

Le problème exposé ci-dessus résulte d'une limite physique concernant la durée minimale pour effectuer une mesure à l'aide du dispositif 6 de la figure 3. Premièrement il est nécessaire d'avoir une quantité de lumière suffisante qui soit réfléchie par la couche transparente 2 et fournie au spectromètre 20 pour permettre à la rangée de photodiodes 24 d'intégrer des intensités de lumière significatives. Pour répondre à ce problème, l'homme du métier cherchera en premier lieu à diminuer la durée de la mesure lorsque la vitesse de défilement de la couche augmente. Pour ce faire, il est nécessaire d'effectuer une lecture ultra-rapide à l'aide d'un spectromètre de haute technologie et d'augmenter l'intensité lumineuse du faisceau incident. Le temps d'intégration minimal d'un spectromètre conventionnel est de l'ordre de la milliseconde. Pour diminuer ce temps de lecture, on peut notamment utiliser un convertisseur analogique-numérique ultra-rapide qui est très onéreux. Pour augmenter l'intensité lumineuse du faisceau incident, on doit utiliser des sources lumineuses plus onéreuses et demandant des précautions particulières dues à l'augmentation de l'intensité lumineuse.

Le but de la présente invention est de fournir un dispositif de mesure de couches transparentes relativement minces permettant d'effectuer des mesures précises de l'épaisseur de telles couches en défilement à relativement grande vitesse, sans nécessiter une augmentation de l'intensité du faisceau de lumière incident et/ou un convertisseur ultra-rapide associé au spectromètre.

A cet effet, la présente invention a pour objet un dispositif de mesure par interférométrie de l'épaisseur d'une couche transparente qui se caractérise par le fait que sa tête optique comprend une unité rotative munie d'un premier miroir oblique relativement à l'axe de rotation de cette unité rotative et agencé, au moins pendant des périodes de mesure, sur le chemin optique du faisceau lumineux incident sur la couche transparente, ce premier miroir ayant une surface plane ou presque plane et étant agencé de manière à recevoir ledit faisceau incident selon une direction différente à une direction normale à ladite première surface, et à réfléchir ce faisceau incident selon des directions non parallèles à l'axe de rotation de l'unité rotative. La tête optique comprend en outre un deuxième miroir qui est également oblique relativement à l'axe de rotation de ladite unité rotative et agencé sur le chemin optique dudit faisceau incident pendant les périodes de mesure, le premier miroir recevant le faisceau incident avant le deuxième miroir.

Grâce à ces caractéristiques, comme cela sera exposé plus en détail par la suite, le faisceau incident sur la couche transparente se déplace selon la direction de défilement de la couche de manière sensiblement linéaire sur une certaine distance de mesure lorsque la tête rotative est entraînée en rotation par des moyens moteurs équipant le dispositif de l'invention. En synchronisant la vitesse de rotation de l'unité rotative avec la vitesse de défilement de la couche, on dispose d'un temps de mesure relativement long avec le spot du faisceau incident sur la couche variant relativement peu et idéalement pas du tout relativement à un référentiel lié à la couche en défilement.

Selon un mode de réalisation préféré, le dispositif de mesure selon l'invention est caractérisé par le fait que le premier miroir réfléchit le faisceau incident sensiblement selon des directions perpendiculaires à l'axe de rotation de l'unité rotative, en direction du deuxième miroir. Dans une variante préférée, le faisceau incident est réfléchi par le deuxième miroir selon une direction sensiblement parallèle à l'axe de rotation pendant les périodes de mesure.

La présente invention sera décrite ci-après de manière plus détaillée à l'aide de la description suivante faite en référence au dessin annexé, donné à titre d'exemples nullement limitatifs, et dans lequel :

- les figures 1 et 2, déjà décrites, exposent le principe de la mesure par interférométrie de l'épaisseur d'une couche transparente;
- la figure 3, déjà décrite, montre schématiquement un dispositif de mesure par interférométrie de l'épaisseur de couches transparentes de l'art antérieur;
- la figure 4 présente partiellement en coupe un premier mode de réalisation d'un dispositif de mesure selon l'invention;
- la figure 5 est une vue de dessous en plan de l'unité rotative de la figure 4;
- la figure 6 est un graphe représentant le parcours horizontal d'un faisceau lumineux en fonction de la position angulaire de l'unité rotative de la figure 3;
- la figure 7 est un graphe donnant la variation du trajet d'un faisceau optique sur une couche mince en défilement par rapport à un point fixe de cette couche;
- la figure 8 représente partiellement un deuxième mode de réalisation d'un dispositif selon l'invention;
- la figure 9 donne deux courbes d'optimisation des dimensions de l'unité rotative respectivement des premier et deuxième modes de réalisation;
- la figure 10 est une vue en coupe d'un troisième mode de réalisation de l'invention;
- la figure 11 représente une vue de dessus d'un quatrième mode de réalisation de l'invention; et
- la figure 12 est une vue en coupe selon la ligne XII-XII de la figure 11.

A l'aide des figures 4 à 7, on décrira ci-après un premier mode de réalisation d'un dispositif de mesure par interférométrie selon l'invention.

Dans tous les modes de réalisation décrits ci-après, le dispositif de mesure selon l'invention comprend, comme dans l'art antérieur décrit à la figure 3, une source de lumière blanche collimatée 8, 10 et un faisceau de fibres 12 conduisant la lumière de la source aux moyens de focalisation 18, ces derniers fournissant en sortie un faisceau de lumière 28 destiné à être projeté sur la couche transparente 2 en mouvement selon une direction de mouvement perpendiculaire au plan de la figure 4.

Selon le premier mode de réalisation, le dispositif de l'invention comprend une tête de mesure 26 formée d'une unité rotative 30 autour d'un axe de rotation 40. Cette unité 30 est formée d'un disque 32 présentant dans sa partie inférieure un évidement évasé 42 dans lequel est agencé un premier miroir 34, définissant un miroir intérieur, proche de l'axe de rotation 40, et un deuxième miroir 38, située en face du premier miroir dans l'évidement 42. Ce deuxième miroir définit un miroir extérieur, c'est-à-dire éloigné de l'axe 40. Relativement à l'axe 40, les miroirs 34 et 38 sont agencés en coupe de manière oblique, c'est-à-dire avec une inclinaison. Dans la variante représentée à la figure 4, dans le plan de coupe de cette figure, les miroirs 34 et 38 présentent chacun un angle de 45° avec l'axe de rotation 40, qui est parallèle à l'axe optique 35 du faisceau de lumière 28 sortant des moyens de focalisation 18. En outre, les miroirs 34 et 38 sont agencés de manière orthogonale l'un à l'autre dans ce plan de coupe. Le faisceau lumineux 28 arrivant sur le premier miroir 34 est réfléchi selon un axe optique 36 horizontal, c'est-à-dire perpendiculaire à l'axe de rotation 40. Ce faisceau lumineux arrive ensuite sur le deuxième miroir 38 qui le réfléchit selon un axe optique 37 en direction du film 2, l'axe 37 étant sensiblement parallèle à l'axe de rotation 40.

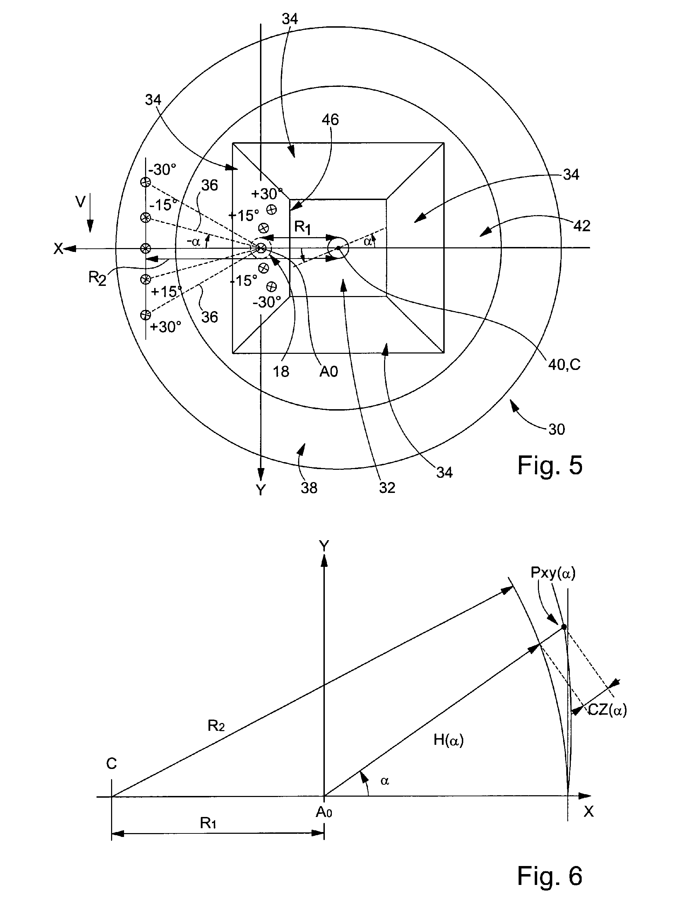

Comme le montre la figure 5 qui est une vue de dessous du disque rotatif 32, l'unité rotative 30 comprend quatre miroirs identiques 34, décalés angulairement de 90° l'un par rapport au suivant, et un miroir extérieur circulaire 38. Selon l'invention, les miroirs intérieurs 34 ont une surface plane ou presque plane. Dans ce premier mode de réalisation, le miroir extérieur 38 définit une surface tronconique.

La tête 26 selon l'invention est particulièrement remarquable par le fait que son mouvement rotatif à vitesse continue permet au faisceau lumineux 29 projeté sur la couche transparente 2 de suivre un tracé sensiblement rectiligne sur une certaine distance, et cela à une vitesse sensiblement constante pouvant être synchronisée à la vitesse de défilement V de la couche 2. A l'aide des figures 5 et 6, on expliquera ce phénomène et le résultat pouvant être obtenu avec un dispositif tel que décrit ici.

Le fait qu'un mouvement rotatif de la tête 26 engendre un déplacement quasi rectiligne du faisceau de lumière incident sur la couche dont on mesure l'épaisseur provient premièrement du fait que le miroir 34 recevant le faisceau incident 28 de la source de lumière ne présente pas une surface de révolution autour de l'axe de rotation 40. Dans le cas particulier et facile à mettre en oeuvre, c'est-à-dire en choisissant une surface plane pour le miroir 34, on observe essentiellement deux phénomènes qui varient le parcours du faisceau incident 28 dans le plan général du disque 32, c'est-à-dire dans un plan perpendiculaire à l'axe 40. Premièrement, l'orientation de l'axe optique 36 dans ce plan général varie en fonction de la position angulaire $\alpha$ de l'unité rotative 30. En effet, le miroir 34 réfléchit la lumière dans un plan défini par l'axe optique fixe 35 du faisceau incident 28 et la direction normale au miroir 34. Ainsi, lorsque l'unité 30 effectue une rotation entre un angle $\alpha 1$ égal à - 30° et un angle $\alpha 2$ égal à 30°, la direction de propagation horizontale du faisceau incident 28 varie également entre un angle égal à - 30° et un angle égal à 30° relativement à un centre A0 correspondant à la position de l'axe optique vertical 35. On notera que le point A0 est un point fixe étant donné que les moyens de focalisation 18 sont agencés de manière fixe dans la tête de mesure 26. Ainsi, l'axe optique horizontal 36 balaie un espace entre un angle de - 30° à 30° lorsque la tête rotative 30 effectue une rotation de - 30° à 30° relativement à l'axe de référence X. L'axe X définit la direction horizontale dans un plan défini par l'axe de rotation 40 et une droite normale au miroir 34 lorsqu'ils se croisent. La distance de propagation horizontale du faisceau incident 28 jusqu'à un cercle de rayon R2 centré sur l'axe 40 varie en fonction de $\alpha$ et est défini par la suite par la fonction H ($\alpha$). Le rayon R2 correspond au point d'impact du faisceau 28 sur le miroir extérieur 38 lorsque l'angle $\alpha = 0$. Or, le deuxième phénomène, qui conduit au résultat de l'invention, provient du fait que le point d'impact du faisceau incident sur le miroir externe 38 ne reste pas à une distance constante R2 de l'axe de rotation 40. En effet, étant donné que le miroir 34 est agencé obliquement relativement à l'axe de rotation 40 et à l'axe optique 35 du faisceau arrivant sur ce miroir 34, le point d'impact sur ce miroir, représenté à la figure 5, descend le long du miroir 34 lors que l'angle $\alpha$ augmente. En d'autres termes, le point d'impact du faisceau incident 28 se rapproche du bord inférieur rectiligne 46 du miroir 34 alors que l'axe optique 35 du faisceau incident sortant des moyens de focalisation 18 reste à une distance R1 de l'axe de rotation 40. Par conséquent, la hauteur de l'axe optique horizontal 36 varie en fonction de $\alpha$ et diminue lorsque $\alpha$ augmente. Cette variation de hauteur de l'axe optique 36 est donnée ci-après par la fonction Z ($\alpha$). Or, une descente de l'axe optique 36 relativement au disque 32 engendre une augmentation du chemin optique selon cet axe 36 pour le faisceau incident 28 puisque le miroir extérieur 38 est oblique relativement au plan horizontal et perpendiculaire au miroir 34. Dans le cas du premier mode de réalisation décrit ici, le miroir 38 définissant une tranche de cône centrée sur l'axe de rotation 40, une coupe de ce miroir 38 par un quelconque plan comprenant l'axe 40 reste invariable, c'est-à-dire tel que représenté à la figure 4 qui est une coupe dans le plan défini par l'axe 40 et l'axe de référence X. L'augmentation du chemin optique horizontal du faisceau incident 28 est CZ ($\alpha$) = - Z ($\alpha$) lorsque le miroir 38 présente, dans un quelconque plan de coupe comprenant l'axe 40, un angle de 45° relativement à cet axe 40°.

Le point défini par l'axe 40 dans un plan horizontal XY porte la référence C sur les figures. A l'aide d'un calcul analytique, on peut connaître en première approximation la position $P_{XY}$ ($\alpha$) du point d'impact de l'axe optique 37 sur le film ou la couche transparente 2 par les équations suivantes qui donnent la position correspondante au point d'impact de l'axe optique horizontal 36 sur le miroir extérieur 38. On fait ici une approximation étant donné que le miroir 38 réfléchit le faisceau incident 28 selon une direction pas exactement parallèle à l'axe de rotation 40, ce dernier étant perpendiculaire au plan général défini par le film ou la couche transparente 2.

Pour les variables susmentionnées, on obtient :

$$Z(\alpha) = - R_1 (\sqrt{1+tg^2\alpha} - 1)$$

$$H(\alpha) = \sqrt{R_2^2 + R_1^2(\cos^2\alpha - 1)} - R1 \cdot \cos \alpha$$

$$P(\alpha) = H(\alpha) + CZ(\alpha)$$

$$P(\alpha) = R_1(\sqrt{(R_2/R_1)^2 + (\cos^2\alpha - 1)} + \sqrt{1+tg^2\alpha} - 1 - \cos\alpha)$$

Les coordonnés du point d'impact P sont donnés par

$$Pxy(\alpha) = [P(\alpha)\cos\alpha ; P(\alpha)\sin\alpha]$$

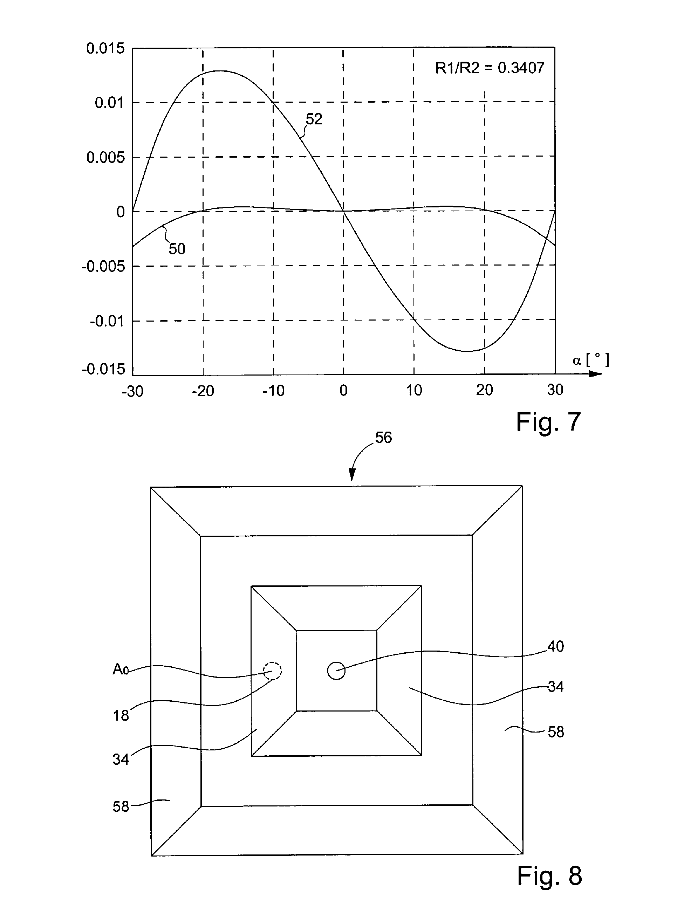

La figure 7 représente de manière graphique ce résultat lorsque la vitesse de rotation de l'unité rotative 30 est synchronisée avec la vitesse de défilement V de la couche 2 de manière à ce que la position du point d'impact de l'axe optique 37 selon la direction de défilement soit identique sur la couche pour un angle $\alpha$ = - 30° correspondant au début de la mesure et un angle $\alpha$ = 30° correspondant à la fin de la mesure. La courbe 50 donne l'écartement selon l'axe de référence X alors que la courbe 52 donne l'écartement selon l'axe de référence perpendiculaire Y, cet axe Y correspondant à la direction de défilement du film.

Les graphes 50 et 52 correspondent à un cas où le rapport R1/R2 = 0.3407. Les écarts ou variations de position représentés à la figure 7 sont donnés sur une échelle normalisée selon R2. On observe que la variation selon X est très faible de sorte que le faisceau décrit bien un segment rectiligne parallèle à la direction de défilement Y. On observe toutefois que la vitesse de déplacement du point d'impact du faisceau incident 28 sur la couche 2 n'a pas une vitesse de déplacement tout à fait constante, expliquant la variation du point d'impact sur la couche 2 selon l'axe Y donnée par la courbe 52.

Ainsi, il est possible d'effectuer une mesure très localisée du film 2 en défilement durant un intervalle de temps correspondant à la rotation de l'unité rotative 30 entre un angle de - 30° à 30°, ces valeurs extrêmes étant données seulement à titre d'exemple nullement limitatif. En utilisant une source de lumière blanche traditionnelle et un spectromètre typique pour des dispositifs de mesure d'épaisseur par interférométrie, on peut mesurer précisément l'épaisseur d'une couche ou d'un film défilant à des vitesses supérieures à mille mètres/minute. Ceci constitue une performance exceptionnelle pour un dispositif relativement simple et peu onéreux. On notera qu'il est nécessaire de suivre un film se déplaçant à une vitesse d'environ 1000 m par minute sur une distance d'environ 15 à 20 millimètres pour effectuer une mesure dans un intervalle de temps typique d'environ 1 milliseconde, ce qui est obtenu par un dispositif de mesure selon l'invention.

Selon une variante du premier mode.de réalisation (non représentée sur le dessin), le deuxième miroir extérieur n'est pas porté par l'unité rotative, mais il est agencé de manière fixe dans la tête de mesure. Comme le miroir extérieur est tronconique et forme une surface de révolution autour de l'axe de rotation de l'unité rotative, on comprend que cette variante ne modifie pas optiquement le dispositif de l'invention. On notera toutefois qu'une telle variante avec un miroir extérieur fixe peut aussi être prévue avec un miroir ne définissant pas une surface de révolution. L'homme du métier a à sa disposition les outils mathématiques qui lui permettront de calculer les trajectoires du faisceau incident, respectivement du faisceau réfléchi par la couche transparente, et d'optimiser la surface de ce miroir extérieur.

La figure 8 représente schématiquement une unité rotative 56 selon un deuxième mode de réalisation de l'invention qui constitue un mode préféré. Il se distingue essentiellement du premier mode de réalisation par le fait que le miroir extérieur n'est pas tronconique, mais formé de quatre miroirs plans ou presque plans 58 agencés en regard des quatre miroirs 34, de manière orthogonale à ces derniers. Ce mode de réalisation est avantageux car le faisceau incident est réfléchi par le miroir extérieur parallèlement à l'axe de rotation de l'unité rotative pendant les périodes de mesure. Ainsi, pendant toute une mesure, le faisceau incident est projeté sur la couche transparente de manière orthogonale à cette couche. Il résulte de cette caractéristique que le faisceau réfléchi par la couche transparente au cours de chaque mesure est également parallèle à l'axe de rotation, le faisceau incident étant ainsi réfléchi sur lui-même. Ce faisceau réfléchi revient donc, au moins pendant les périodes de mesure, au point d'injection de la lumière qui est un point fixe du dispositif de mesure. Ceci facilite la réception du signal optique de mesure.

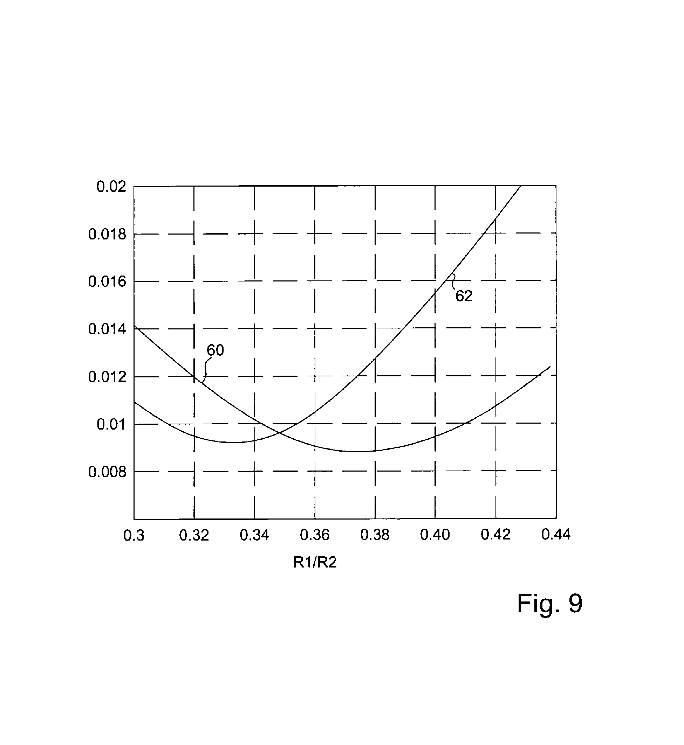

Il est possible à l'aide de programmes de calcul de mesurer un écart type normalisé selon R2 pour le rapport R1/R2 et pour chacun des deux modes de réalisation décrits ci-avant. Le résultat de ce calcul est donné à la figure 9, la courbe 60 correspondant au miroir extérieur tronconique du premier mode de réalisation alors que la courbe 62 correspond au miroir extérieur plan du deuxième mode de réalisation. Dans les deux cas, il est possible d'obtenir un écart type inférieur à 1% de R2. Le rapport optimum varie entre les deux modes de réalisation comme le montre ces courbes 60 et 62.

Pour que le dispositif de mesure fonctionne correctement, la vitesse angulaire de rotation w doit être synchronisée avec la vitesse de défilement linéaire V du film ou de la couche transparente dont on mesure l'épaisseur. En prenant comme hypothèse que la mesure débute à un angle - $\alpha_{max}$ et se termine à l'angle $\alpha_{max}$, la vitesse de synchronisation

$$\omega_{sync} = \frac{\alpha_{max} \cdot V}{P(\alpha_{max}) \cdot \sin\alpha_{max}}$$

Dans les deux modes de réalisation décrits, le faisceau réfléchi par la couche mesurée est parallèle au faisceau incident sur cette couche. Il est possible de modifier l'agencement du dispositif de manière à ce que le faisceau incident ne soit pas orthogonal à l'échantillon et suive ainsi un chemin de retour vers le spectromètre différent du chemin optique du faisceau incident.

Selon une variante, il est possible de donner une inclinaison différente au moyen de focalisation connecté au faisceau de fibres optique de manière à ce que l'axe optique du faisceau incident sur le premier miroir présente une direction non parallèle à l'axe de rotation. Dans ce cas, pour obtenir en réflexion du premier miroir un axe optique horizontal, l'inclinaison du miroir intérieur doit être modifiée de manière appropriée.

Pour diminuer encore l'écart type du point d'impact du faisceau sur la couche en défilement relativement à un point fixe de cette couche, il est possible d'optimiser la surface des miroirs, en particulier du miroir intérieur pour que le point d'impact sur la couche en mouvement soit parfaitement rectiligne avec un déplacement à vitesse constante selon la direction de défilement de la couche. Il existe des outils informatiques spécifiques à l'optique permettant de définir à l'aide d'algorithmes numériques la surface optimale de tels miroirs. On citera à titre d'exemple des programmes dénommés "Optics Lab Software", "Ray Dream Designer", "POV-RAY", etc. Dans ce cas, la surface théorique idéale ne correspond plus pour le premier miroir à une surface plane, mais cette surface reste cependant globalement presque plane.

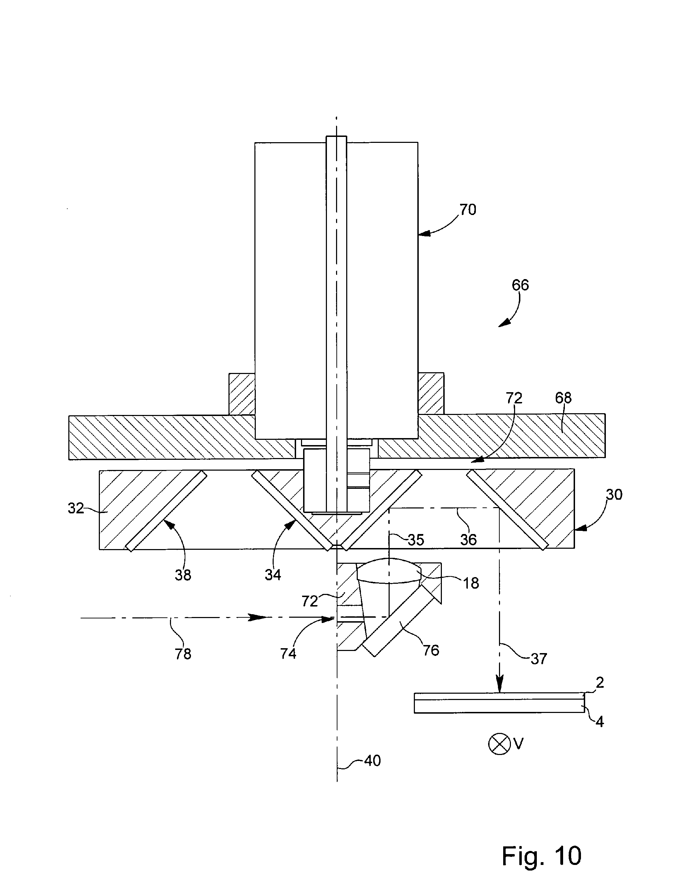

A l'aide de la figure 10, on décrira brièvement un troisième mode de réalisation d'un dispositif de mesure selon l'invention. Les références déjà décrites précédemment ne seront pas à nouveau décrites ici en détail. L'unité rotative 30 est entraînée en rotation par un moteur 70 comme dans les deux premiers modes de réalisation. Ce moteur est situé au-dessus du disque 32 et supporté par une base fixe 68. La tête de mesure 66 comprend en outre un support 72 qui est fixé à la base 68 et forme un pont inversé au-dessous de cette base. Le support 72 est agencé de manière que le module rotatif 30 peut tourner autour de son axe de rotation 40.

En son milieu, le support 72 présente dans une paroi latérale une ouverture 74 pour l'entrée du faisceau incident dans la tête 66. Le support 72 comprend un miroir 76 présentant un angle de 45° avec l'axe de rotation 40. Ce miroir permet de dévier verticalement selon l'axe optique 35 un faisceau incident arrivant sur ce miroir 76 selon un axe horizontal 78. Ce mode de réalisation présente l'avantage de pouvoir installer la source de lumière en périphérie de la tête de mesure 66 avec le faisceau de fibres agencé horizontalement à proximité du disque tournant 30 et connecté à l'ouverture 74. On notera qu'il est également possible de fournir un faisceau de lumière sensiblement collimaté directement depuis une région périphérique à la tête 66. Grâce à ces caractéristiques, l'ensemble de la région situé en dessous de la tête 66 est libre pour le défilement d'une couche mince sur un support 4 en mouvement. Ceci est particulièrement avantageux lorsque le support 4 présente de grandes dimensions et qu'une mesure dans une zone intérieure du film 2 est souhaitée.

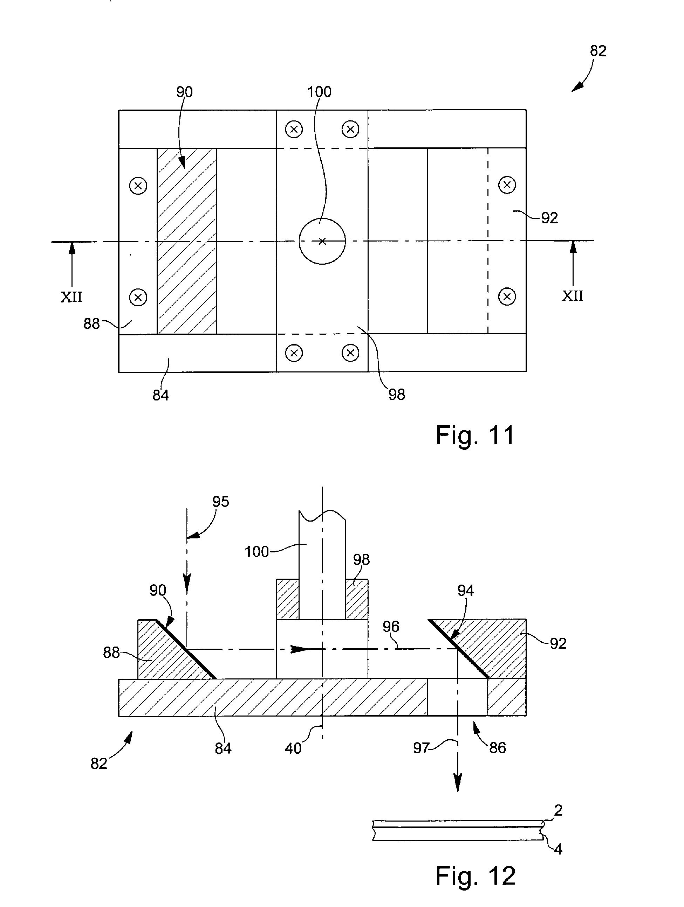

A l'aide des figures 11 et 12, on décrira ci-après un quatrième mode de réalisation d'un dispositif selon l'invention.

La tête de mesure 82 comprend une plaque de base 84 présentant une ouverture 86. Sur cette plaque 84 est agencée un premier support 88 portant un premier miroir plan 90 dont la normale est dirigée vers le haut. La plaque 84 porte en outre un deuxième support 92 avec un deuxième miroir 94 partiellement tronconique. Le miroir 94 présente un angle de 45° avec l'axe de rotation 40 et, dans une variante où sa surface est plane, le miroir 94 est parallèle au miroir 90 et situé à un même niveau que ce dernier. La plaque 82 et les éléments qu'elle supporte décrits ci-avant sont entraînés en rotation à l'aide d'un moteur non représenté situé au-dessus de l'unité rotative. Ce moteur entraîne en rotation un arbre 100 qui est monté fixement dans un pont 98 situé au-dessus des miroirs 90 et 94 et fixé latéralement à la base 84.

Ce mode de réalisation est particulièrement avantageux par le fait que le faisceau incident entre depuis le dessus de l'unité rotative selon un axe optique 95. Le faisceau incident se propageant selon cet axe optique 95 est réfléchi par le premier miroir 90 de manière sensiblement horizontale en direction du deuxième miroir 94. Pour permettre le passage du faisceau entre le miroir 90 et le miroir 94, le support 98 avec ses deux parties latérales de fixation à la plaque 84 présente une forme de pont laissant libre l'espace entre les miroirs 90 et 94. Entre ces deux miroirs, l'axe optique 96 est donc sensiblement horizontal. Le faisceau se propageant selon cet axe 96 est réfléchi par le deuxième miroir 94 selon une direction sensiblement verticale, c'est-à-dire parallèle à l'axe de rotation 40. Le faisceau incident se propage alors selon un axe optique 97 qui passe à travers l'ouverture 86 prévue à cet effet. Grâce aux caractéristiques de ce mode de réalisation, la région située au-dessous de la plaque tournante 84 est entièrement libre. Le faisceau de lumière est introduit dans l'unité rotative du côté opposé à la couche 2 dont il est prévu de mesurer l'épaisseur, ce qui est très avantageux

Ce quatrième mode se distingue de plus par le fait que les dimensions de la tête de mesure peuvent être diminuées au maximum étant donné que le trajet horizontal selon l'axe optique 96 peut avoir une longueur proche de la longueur de la plaque 84. Ainsi, pour une tête aux dimensions restreintes il est possible d'obtenir un parcours du faisceau incident sur la couche 2 relativement grand.

D'autres variantes peuvent être envisagées par l'homme du métier sans sortir du cadre de la présente invention. En particulier, il est possible de prévoir certaines parties de la tête de mesure formées de matériaux transparents de manière à permettre au faisceau lumineux de traverser ces certaines parties. Ainsi, les miroirs peuvent être agencés derrière une plaque ou un support transparent. L'utilisation de matériaux transparents à la lumière utilisée permet de prévoir d'autres modes de construction de dispositifs de mesure selon l'invention.

## Revendications

1. Dispositif de mesure par interférométrie de l'épaisseur (d) d'une couche transparente (2) comprenant une source de lumière (8, 10), une tête optique (26; 66; 82) agencée pour recevoir, au moins pendant des périodes de mesure, un faisceau incident (28) formé par ladite lumière, des moyens pour conduire optiquement un faisceau réfléchi par ladite couche pendant lesdites périodes de mesure en direction d'un spectromètre (20), **caractérisé en ce que** ladite tête optique comprend une unité rotative (30; 82) munie d'un premier miroir (34; 90) qui est oblique relativement à l'axe de rotation (40) de cette unité rotative et agencé sur le chemin optique (35, 36, 37; 95, 96, 97) dudit faisceau incident pendant lesdites périodes de mesure, ce premier miroir ayant une première surface plane ou presque plane et étant agencé de manière à recevoir ledit faisceau incident selon une direction différente à une direction normale à ladite première surface et à réfléchir ce faisceau incident selon des directions non-parallèles audit axe de rotation, ladite tête optique comprenant en outre un deuxième miroir (38; 58; 94) qui est également oblique relativement à l'axe de rotation (40) de ladite unité rotative et agencé sur ledit chemin optique dudit faisceau incident pendant lesdites périodes de mesure, ledit premier miroir recevant ledit faisceau incident avant ledit deuxième miroir.

2. Dispositif selon la revendication 1, **caractérisé en ce que** ledit premier miroir (34; 90) réfléchit ledit faisceau incident sensiblement selon des directions perpendiculaires (36) audit axe de rotation (40), en direction dudit deuxième miroir (38; 58; 94).

3. Dispositif de mesure selon la revendication 1 ou 2, **caractérisé en ce que** ledit premier miroir (34; 90) présente un angle d'environ 45° relativement audit axe de rotation (40), ladite tête optique étant agencée pour que ledit faisceau incident (28) arrive sur ce premier miroir selon une direction sensiblement parallèle audit axe de rotation (40).

4. Dispositif de mesure selon l'une des revendications précédentes, **caractérisé en ce que** le deuxième miroir est porté par ladite unité rotative.

5. Dispositif de mesure selon l'une des revendications précédentes, **caractérisé en ce que** ledit deuxième miroir (38) a une surface sensiblement tronconique dont l'axe de révolution est confondu avec ledit axe de rotation (40).

6. Dispositif de mesure selon la revendication 4, **caractérisé en ce que** ledit deuxième miroir (58) présente une surface plane ou presque plane.

7. Dispositif selon l'une des revendications précédentes, **caractérisé en ce que** ledit deuxième miroir (38; 58; 94) est agencé pour réfléchir le faisceau incident (28) de manière sensiblement parallèle audit axe de rotation (40) pendant lesdites périodes de mesure.

8. Dispositif de mesure selon l'une des revendications précédentes, **caractérisé en ce que** ledit faisceau incident arrive à ladite tête optique du côté de la couche (2) à mesurer, lesdits premier et deuxième miroirs (34, 38; 58) étant orientés de manière orthogonale l'un à l'autre.

9. Dispositif de mesure selon la revendication 8, **caractérisé en ce que** ladite tête (68) comprend un troisième miroir agencé au-dessous de ladite unité rotative (30) et orienté de manière à dévier selon la direction de l'axe de rotation (40) un faisceau de lumière entrant selon une direction (78) perpendiculaire à cet axe de rotation.

10. Dispositif de mesure selon l'une des revendications 1 à 7, **caractérisé en ce que** ledit premier miroir (90) et ledit deuxième miroir (94) sont agencés parallèlement l'un à l'autre de part et d'autre de l'axe de rotation (40), ledit faisceau incident entrant dans ladite unité rotative (82) du côté opposé à ladite couche transparente (2), les moyens d'entraînement en rotation de ladite tête étant également agencés au-dessus de ladite unité rotative.

Fig. 1

Fig. 2

Fig. 3

Fig. 4

Fig. 5

Fig. 6

R1/R2 = 0.3407

52

50

α [ ° ]

**Fig. 7**

56

A₀

18

34

58

40

34

58

**Fig. 8**

Fig. 9

70

66

72  68

32

30

38  34

35  36

18

72

78  74  76

37

2

4

⊗V

40

Fig. 10

Fig. 11

Fig. 12

**Office européen des brevets**

**RAPPORT DE RECHERCHE EUROPEENNE**

Numéro de la demande

EP 04 01 0795

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN<br>vol. 015, no. 439 (P-1273),<br>8 novembre 1991 (1991-11-08)<br>-& JP 03 183903 A (KURABO IND LTD),<br>9 août 1991 (1991-08-09)<br>* abrégé *<br>* figures 1-11 * | 1,4,6 | G01B11/06 |
| A | | 2,3,5,<br>7-10 | |
| | ----- | | |
| A | EP 0 293 177 A (KURASHIKI BOSEKI KK)<br>30 novembre 1988 (1988-11-30)<br>* page 1, ligne 3-13 *<br>* page 3, ligne 37 - page 5, ligne 21 *<br>* figures 1,2 * | 1-10 | |
| | ----- | | |
| A | US 6 549 292 B1 (SCHMIDT WILLIAM E  ET AL)<br>15 avril 2003 (2003-04-15)<br>* colonne 3, ligne 45 - colonne 4, ligne 33 *<br>* figure 2 * | 1-10 | |
| | ----- | | DOMAINES TECHNIQUES RECHERCHES (Int.Cl.7) |
| A | FR 2 766 924 A (REDONNET JEAN P)<br>5 février 1999 (1999-02-05)<br>* le document en entier * | 1-10 | G01B<br>G01N |
| | ----- | | |

Le présent rapport a été établi pour toutes les revendications

| Lieu de la recherche | Date d'achèvement de la recherche | Examinateur |
|---|---|---|
| Munich | 21 septembre 2004 | Grand, J-Y |

CATEGORIE DES DOCUMENTS CITES

X : particulièrement pertinent à lui seul
Y : particulièrement pertinent en combinaison  avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

................................................................................
& : membre de la même famille, document  correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 01 0795

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-09-2004

| Document brevet cité au rapport de recherche | | Date de publication | Membre(s) de la famille de brevet(s) | | Date de publication |
|---|---|---|---|---|---|
| JP 03183903 | A | 09-08-1991 | JP | 2865337 B2 | 08-03-1999 |
| EP 0293177 | A | 30-11-1988 | JP | 1053101 A | 01-03-1989 |
| | | | CA | 1323434 C | 19-10-1993 |
| | | | EP | 0293177 A2 | 30-11-1988 |
| | | | US | 4893024 A | 09-01-1990 |
| US 6549292 | B1 | 15-04-2003 | AU | 9318001 A | 29-04-2002 |
| | | | WO | 0233349 A1 | 25-04-2002 |
| FR 2766924 | A | 05-02-1999 | FR | 2766924 A1 | 05-02-1999 |

EPO FORM P0460